(19) Europäisches Patentamt
European Patent Office
Office européen des brevets

(11) **EP 1 470 622 B1**

(12) **FASCICULE DE BREVET EUROPEEN**

(45) Date de publication et mention
de la délivrance du brevet:
**03.05.2017 Bulletin 2017/18**

(51) Int Cl.:
*H01S 3/098* (2006.01)      *H01S 5/18* (2006.01)
*G02F 1/35* (2006.01)

(21) Numéro de dépôt: **03715025.7**

(22) Date de dépôt: **20.01.2003**

(86) Numéro de dépôt international:
**PCT/FR2003/000169**

(87) Numéro de publication internationale:
**WO 2003/063307 (31.07.2003 Gazette 2003/31)**

(54) **COMPOSANT A ABSORBANT SATURABLE ET PROCEDE DE FABRICATION DE COMPOSANT A ABSORBANT SATURABLE**

SÄTTIGBARES ABSORBERBAUTEIL UND VERFAHREN ZU DESSEN HERSTELLUNG

SATURABLE ABSORBER COMPONENT AND METHOD FOR PRODUCTION OF A SATURABLE ABSORBER COMPONENT

(84) Etats contractants désignés:
**AT BE BG CH CY CZ DE DK EE ES FI FR GB GR IE IT LI LU MC NL PT SE SK TR**

(30) Priorité: **22.01.2002 FR 0200756**

(43) Date de publication de la demande:
**27.10.2004 Bulletin 2004/44**

(73) Titulaires:
• **CENTRE NATIONAL DE LA RECHERCHE SCIENTIFIQUE**
**75794 Paris Cedex 16 (FR)**
• **Orange**
**75015 Paris (FR)**

(72) Inventeurs:
• **OUDAR, Jean-Louis**
**92290 CHATENAY MALABRY (FR)**
• **NELEP, Constantin**
**92140 CLAMART (FR)**
• **CHOUMANE, Houtai**
**94230 Cachan (FR)**

(74) Mandataire: **Regimbeau**
**20, rue de Chazelles**
**75847 Paris Cedex 17 (FR)**

(56) Documents cités:
**WO-A-01/59895**      **WO-A-01/67563**
**JP-A- H09 244 075**      **US-A- 5 858 814**

• **KELLER U ET AL: "SOLID-STATE LOW-LOSS INTRACAVITY SATURABLE ABSORBER FOR ND:YLF LASERS: AN ANTIRESONANT SEMICONDUCTOR FABRY-PEROT SATURABLE ABSORBER" OPTICS LETTERS, OPTICAL SOCIETY OF AMERICA, WASHINGTON, US, vol. 17, no. 7, 1 avril 1992 (1992-04-01), pages 505-507, XP000262597 ISSN: 0146-9592**
• **TAKAHASHI R: "LOW-TEMPERATURE-GROWN SURFACE-REFLECTION ALL-OPTICAL SWITCH (LOTOS)" OPTICAL AND QUANTUM ELECTRONICS, CHAPMAN AND HALL, LONDON, GB, no. 33, 2001, pages 999-1017, XP001040797 ISSN: 0306-8919 cité dans la demande**
• **BERNSTEIN L: "SEMICONDUCTOR JOINING BY THE SOLID-LIQUID-INTERDIFFUSION (SLID) PROCESS" JOURNAL OF THE ELECTROCHEMICAL SOCIETY, ELECTROCHEMICAL SOCIETY. MANCHESTER, NEW HAMPSHIRE, US, vol. 12, no. 113, décembre 1966 (1966-12), pages 1282-1288, XP001040800 ISSN: 0013-4651 cité dans la demande**
• **CHIN C LEE ET AL: "AU-IN BONDING BELOW THE EUTECTIC TEMPERATURE" IEEE TRANSACTIONS ON COMPONENTS, HYBRIDS, AND MANUFACTURING TECHNOLOGY, IEEE INC. NEW YORK, US, vol. 16, no. 3, 1 mai 1993 (1993-05-01), pages 311-316, XP000393474 ISSN: 0148-6411 cité dans la demande**

EP 1 470 622 B1

• **WOLFGANG PITTROFF ET AL: "Mounting of High Power Laser Diodeson Boron Nitride Heat Sinks Using an OptimizedAu/Sn Metallurgy", IEEE TRANSACTIONS ON ADVANCED PACKAGING, IEEE SERVICE CENTER, PISCATAWAY, NJ, USA, vol. 24, no. 4, 1 November 2001 (2001-11-01), XP011002388, ISSN: 1521-3323**

**Description**

Domaine technique et art antérieur

La présente invention concerne un composant à absorbant saturable pour le traitement de signaux optiques numériques ainsi qu'un procédé de fabrication de composant à absorbant saturable pour le traitement de signaux optiques numériques.

Le composant selon l'invention trouve des applications particulièrement avantageuses dans le domaine des transmissions optiques à haut débit (régénération tout-optique pour liaisons transocéaniques, amplification de contraste de modulation, conversion de longueur d'onde, démultiplexage temporel par échantillonnage optique, etc.).

Les télécommunications et les technologies de l'information sont actuellement en pleine croissance. Cette croissance dans les échanges d'information nécessite des capacités de transmission de plus en plus importantes.

Dans le cas de transmissions par signal optique, le traitement de l'information s'effectue après conversion du signal optique en signal électrique. Cette opération de conversion limite les capacités de traitement des réseaux de communication. Il est alors nécessaire d'accroître la complexité de ces réseaux pour augmenter la quantité d'information traitée. Pour éviter cet accroissement de complexité, il est indispensable de développer des composants capables de traiter le signal optique de manière « tout optique », c'est-à-dire sans avoir à convertir le signal optique en un signal électrique.

Parmi les composants tout optique sont connus les composants à absorbants saturables. De façon générale, un composant à absorbant saturable a les propriétés suivantes :

- une caractéristique non linéaire en fonction de l'amplitude ou de la phase du signal (cette propriété peut se traduire, par exemple, par une fonction de transfert à seuil),
- un temps de réponse compatible avec le débit de l'information, c'est-à-dire inférieur au temps bit (inverse du débit),
- une puissance seuil de la fonction de transfert compatible avec la puissance du signal.

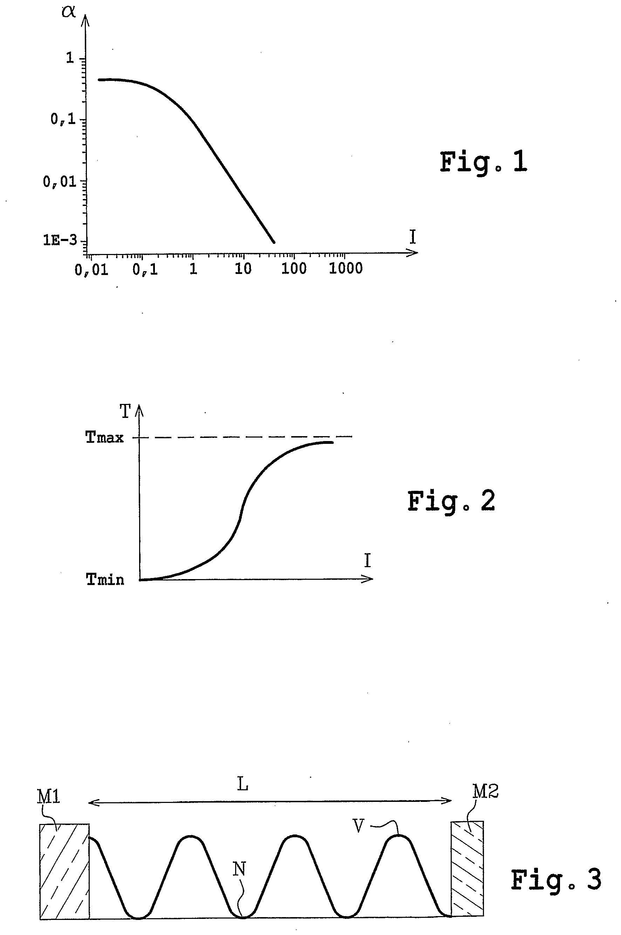

Le fonctionnement d'un composant à absorbant saturable est basé sur le phénomène de saturation de l'absorption des matériaux semi-conducteurs. La variation du coefficient d'absorption $\alpha$ d'un matériau semi-conducteur en fonction de l'intensité I du signal incident qui le traverse est représentée en figure 1. Les signaux de faible intensité subissent l'absorption intrinsèque du matériau et sont en conséquence absorbés. Par contre, les signaux de fortes intensités blanchissent le matériau semi-conducteur jusqu'à réduire son absorption à une valeur sensiblement nulle. C'est le phénomène de saturation de l'absorption. Les signaux de fortes intensités sont alors transmis sans être absorbés.

La fonction de transfert T d'un matériau à absorbant saturable en fonction de l'intensité I du signal incident est représentée en figure 2. La fonction de transfert T est une fonction non linéaire de l'intensité I. Le matériau est opaque ($T=T_{min}$) aux faibles niveaux d'intensités du signal incident, par exemple les niveaux de bruit, et quasi-transparent ($T=T_{max}$) aux niveaux d'intensité élevés, par exemple les niveaux de signal « utile ». Ceci définit le contraste de commutation $T_{max}/T_{min}$.

Afin de renforcer l'effet non linéaire et le contraste de commutation, le matériau à absorbant saturable peut être placé dans une cavité Fabry-Pérot asymétrique résonnante à la longueur d'onde d'utilisation. La cavité comprend deux miroirs M1 et M2 de réflectivités différentes Rb et Rf séparés par une distance L. Une telle cavité est représentée de façon symbolique en figure 3. Après plusieurs allers-retours dans la cavité, un système d'ondes stationnaires s'établit avec des noeuds N et des ventres V d'intensité. Le couplage entre le matériau absorbant et la lumière incidente est alors renforcé d'une part par les allers-retours multiples, et d'autre part en plaçant le matériau absorbant aux ventres de l'onde stationnaire.

Une annulation de la réponse du composant en régime de faibles signaux, par exemple du bruit, peut être obtenue en réalisant des interférences destructives entre les différents faisceaux réfléchis par la cavité. Cette annulation est réalisée par la condition d'adaptation d'impédance suivante :

$$R_f = R_b.e^{-2\,\alpha_0\,L} \quad (1),$$

où

$R_{fb}$ est la réflectivité du miroir avant,
$R_b$ est la réflectivité du miroir arrière,
$\alpha_0$ est l'absorption intrinsèque du matériau, et
L est l'épaisseur d'absorbant dans la cavité.

Différentes fonctions peuvent être mises en oeuvre à l'aide d'une cavité à absorbant saturable. Une première fonction est l'amplification de contraste de modulation dans le cas où un seul signal est envoyé sur la cavité. Une autre fonction concerne la commande de porte optique dans le cas où plusieurs signaux sont envoyés sur la cavité (un signal fort sert alors de signal de commande pour permettre la transmission de signaux de faibles amplitudes).

Une caractéristique avantageuse des cavités à absorbant saturable est que ce type de composant ne possède pas d'électrode. Ceci permet une miniaturisation poussée, une dissipation de chaleur minimale, et une grande simplicité de mise en oeuvre puisqu'il n'est pas nécessaire de prévoir une alimentation électrique.

Ces avantages sont particulièrement intéressants dans le cas où l'on veut traiter plusieurs canaux de longueurs d'onde différentes, puisque ces différents canaux peuvent alors être traités dans des zones voisines d'une même cavité, avec un espacement entre canaux limité uniquement par les conditions de focalisation des faisceaux incidents, dont le diamètre est typiquement de l'ordre de quelques microns.

La réalisation de la condition d'adaptation d'impédance (cf. équation (1)) est indispensable afin d'obtenir un fonctionnement optimal (contraste de commutation élevé). Une étude des tolérances sur cette condition montre que sa réalisation est d'autant plus facile que la cavité est fortement asymétrique ($R_f$ très inférieure à $R_b$). Une forte absorption est alors nécessaire afin de respecter cette condition. Il en résulte une puissance absorbée élevée qu'il faut évacuer pour ne pas dégrader les performances du composant.

Le document « Solid state low loss intracavity staurable absorber for ND : YLF lasers : an antiresonant semiconductor fabry-pcrot saturable absorber » (Keller et Al, Optics letters, optical society of America, Washington, US, vol. 17, no. 7, 1 avril 1992, pages 05-507, XP 000262597 ISSn: 0146-9592) présente un composant comprenant un matériau absorbant situé entre un miroir avant et un miroir arrière, le miroir avant étant enterré par un joint de brasure sur un substrat thermiquement conducteur.

Le document JP H9 244075 présente lui aussi une structure, avec un joint de brasure, telle que définie dans le préambule de la revendication 1.

Un tel joint présente toutefois des inconvénients, notamment du fait qu'il se produit une attaque chimique du miroir métallique, ce qui altère les propriétés du composant.

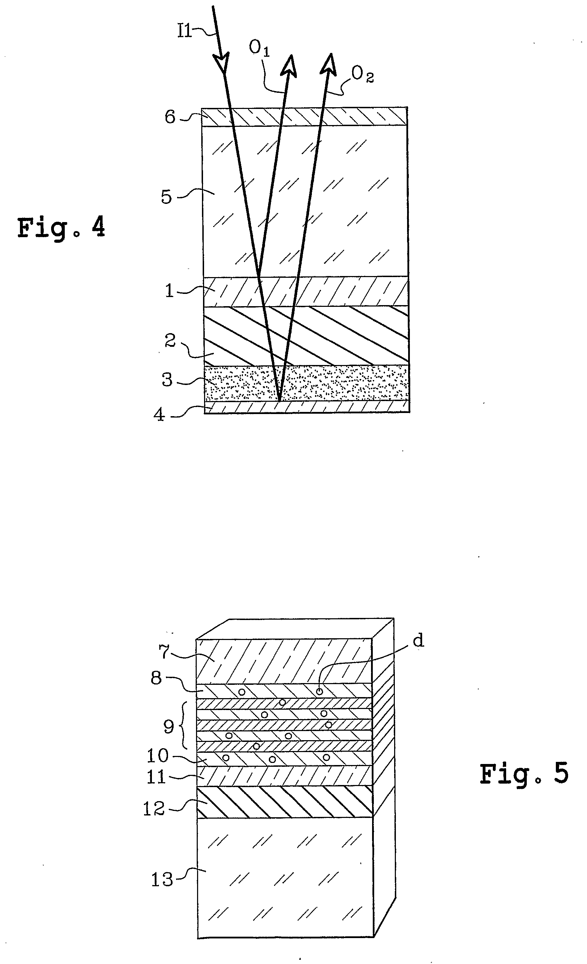

Une cavité à absorbant saturable selon l'art connu est représentée en figure 4. Cette cavité est divulguée dans le document « Low-temperature-grown surface-reflexion all-optical switch (LOTOS) » (Ryo Takahashi, Optical and Quantum Electronics 33 :999-1017, 2001).

La cavité, fortement asymétrique, comprend un miroir avant 1 de très faible réflectivité (typiquement de l'ordre de 1%), un matériau absorbant 2 fait de puits quantiques contraints sur une épaisseur de 4$\mu$m, une couche de contrôle de phase 3 (couche InAlAs/InP) et un miroir arrière métallique en or (Au) 4 de forte réflectivité (typiquement supérieure à 95%). Le miroir 1 de très faible réflectivité est recouvert d'un substrat de croissance 5 sur lequel est déposée une couche anti-reflet 6.

La croissance des couches semi-conductrices est réalisée à basse température. Le dopage des puits quantiques est effectué en même temps que leur croissance. De fortes doses de dopage sont nécessaires pour réduire le temps de réponse. Chacune de ces techniques (croissance basse température et dopage) dégrade les propriétés non-linéaires du matériau absorbant.

Une onde lumineuse incidente I1 qui a traversé le substrat de croissance 5 est réfléchie en partie par le miroir avant 1 sous la forme d'une onde O1. L'onde transmise par le miroir avant 1 fait un aller-retour dans la cavité en étant réfléchie par le miroir arrière 4 sous la forme d'une onde 02. Lors de cet aller-retour dans la cavité, l'onde 02 est en partie absorbée par le matériau absorbant 2, puis elle est transmise à nouveau presque en totalité par le miroir avant 1. Pour obtenir les interférences destructives (minimum de la réflectivité) les deux ondes doivent être égales en amplitude et opposées en phase.

Cette cavité présente plusieurs inconvénients parmi lesquels on peut citer :

- le mode de fabrication qui ne permet aucun contrôle des paramètres de la cavité (une conception avec de grandes tolérances est alors indispensable, d'où le choix d'une cavité fortement asymétrique ($R_f$<<$R_b$)),
- une valeur élevée de la puissance absorbée par le matériau absorbant du fait de l'épaisseur relativement importante de ce matériau (4$\mu$m) (afin de réaliser la condition d'adaptation d'impédance (1)),
- une mauvaise évacuation de la puissance absorbée due au fait que le miroir arrière est en contact direct avec l'air qui est un très mauvais conducteur thermique,
- une mauvaise caractéristique non linéaire de la courbe de transfert du matériau absorbant due aux fortes doses de dopage nécessaires ainsi qu'à la croissance basse température,
- une impossibilité de contrôler les paramètres qui président au réglage de la rapidité du composant due au fait que le dopage des puits quantiques se fait pendant la croissance des puits,
- une obligation d'utiliser un substrat de croissance transparent due au fait que la lumière doit traverser celui-ci sur toute son épaisseur avant d'atteindre la cavité.

Par ailleurs, comme cela a été mentionné précédemment, des interférences destructives doivent être réalisées entre le signal réfléchi par le miroir avant et le signal qui, réfléchi par le miroir arrière, a traversé toute la structure. Ces interférences destructives sont formées par réglage de l'épaisseur de la couche de contrôle de phase, avant le dépôt du miroir métallique. Or, le miroir métallique déphase de façon non négligeable la lumière qu'il réfléchit. Il s'ensuit que le dépôt ultérieur du miroir métallique présente un risque non négligeable de modifier très sensiblement l'état de ces interférences. Les performances du composant peuvent s'en trouver fortement dégradées.

L'invention ne présente pas ces inconvénients.

Exposé de l'invention

En effet l'invention concerne un composant à absorbant saturable tel que défini dans la revendication 1.

L'invention concerne également un procédé de fabrication de composant à absorbant saturable tel que défini dans la revendication 17.

Le composant selon l'invention assure avantageusement une très bonne évacuation de la puissance absorbée.

Le procédé de fabrication du composant selon l'invention permet avantageusement de contrôler les paramètres de la cavité. Un matériau à faible épaisseur absorbante peut alors être inséré dans une cavité avec un miroir avant de réflectivité assez élevée. Cela réduit fortement la puissance absorbée et les effets thermiques.

Brève description des figures

D'autres caractéristiques et avantages apparaîtront à la lecture d'un mode de réalisation préférentiel de l'invention fait en référence aux figures jointes parmi lesquelles :

- la figure 1 représente la variation du coefficient d'absorption $\alpha$ d'un matériau semi-conducteur en fonction de l'intensité d'un signal incident qui le traverse,
- la figure 2 représente la fonction de transfert d'un matériau à absorbant saturable en fonction de l'intensité du signal incident qui le traverse,
- la figure 3 représente un schéma de principe de cavité à absorbant saturable,
- la figure 4 représente une cavité à absorbant saturable selon l'art antérieur,
- la figure 5 représente une cavité à absorbant saturable,
- la figure 6 représente une première étape de fabrication de cavité à absorbant saturable selon un premier mode de réalisation de l'invention,
- la figure 7 représente une deuxième étape de fabrication de cavité à absorbant saturable selon le premier mode de réalisation de l'invention,
- la figure 8 représente une troisième étape de fabrication de cavité à absorbant saturable selon le premier mode de réalisation de l'invention,
- la figure 9 représente une quatrième étape de fabrication de cavité à absorbant saturable selon le premier mode de réalisation de l'invention,
- la figure 10 représente une cinquième étape de fabrication de cavité à absorbant saturable selon le premier mode de réalisation de l'invention,
- la figure 11 représente une sixième étape de fabrication de cavité à absorbant saturable selon le premier mode de réalisation de l'invention,
- la figure 12 représente des courbes de caractérisation spectrale de la cavité à absorbant saturable selon le premier mode de réalisation de l'invention,
- la figure 13 représente des courbes de réponse spectrale de la cavité à absorbant saturable selon le premier mode de réalisation de l'invention,
- la figure 14 représente une première étape de fabrication de cavité à absorbant saturable selon un deuxième mode de réalisation de l'invention,
- la figure 15 représente une deuxième étape de fabrication de cavité à absorbant saturable selon le deuxième mode de réalisation de l'invention,
- la figure 16 représente une troisième étape de fabrication de cavité à absorbant saturable selon le deuxième mode de réalisation de l'invention,
- la figure 17 représente une quatrième étape de fabrication de cavité à absorbant saturable selon le deuxième mode de réalisation de l'invention,
- la figure 18 représente une courbe de transfert non linéaire d'un composant à absorbant saturable selon l'invention,
- la figure 19 représente une courbe de réponse temporelle d'un composant à absorbant saturable selon l'invention.

Sur toutes les figures les mêmes références désignent les mêmes éléments.

Description détaillée de modes de mise en oeuvre de l'invention

Les figures 1, 2, 3 et 4 ont été décrites précédemment, il est donc inutile d'y revenir.

La figure 5 représente une cavité à absorbant saturable. La cavité comprend :

- un miroir avant 7 (dépôt diélectrique ou miroir semi-conducteur),
- une première couche de phase non absorbante 8,
- une structure absorbante 9 constituée par des puits quantiques et des barrières séparant les puits quantiques (cette structure absorbante peut également être constituée par une couche de semi-conducteur massif ou par une structure constituée de boîtes quantiques),
- une deuxième couche de phase non absorbante 10,
- un miroir arrière 11,
- un joint de brasure 12, et
- un substrat 13 choisi pour être un très bon conducteur thermique.

De façon préférentielle, une barrière de diffusion (non représentée sur la figure) est située entre le joint de brasure 12 et le miroir 11.

Le fonctionnement non linéaire du composant est obtenu grâce à la saturation de l'absorption excitonique du matériau absorbant. Cet effet est renforcé par une adaptation de l'impédance de la micro-cavité asymétrique formée par le miroir avant 7, le milieu absorbant 9 et le miroir arrière 11. L'épaisseur de la couche absorbante 9 est préférentiellement choisie de valeur suffisamment faible (par exemple 100nm) pour permettre d'abaisser le seuil énergétique de commutation. Le miroir métallique arrière 11 est fixé sur un substrat 13 très bon conducteur thermique qui assure avantageusement une très bonne évacuation de la puissance absorbée. De très bonnes performances dynamiques du composant sont obtenues grâce à la présence de défauts d créés dans le milieu absorbant par irradiation ionique et sans dégradation de l'absorption excitonique.

Il est donc nécessaire de choisir une composition de matériaux qui présente de bonnes propriétés de saturation d'absorption à la longueur d'onde d'utilisation. Les propriétés de saturation d'absorption dépendent des bandes d'énergie du matériau. Préférentiellement, le matériau absorbant est réalisé à l'aide de puits quantiques. La composition des puits quantiques et des barrières qui séparent les puits quantiques est alors ajustée afin d'avoir une absorption excitonique plus particulièrement marquée à la longueur d'onde d'utilisation.

Un procédé de fabrication du composant selon le mode de réalisation préférentiel de l'invention va maintenant être décrit.

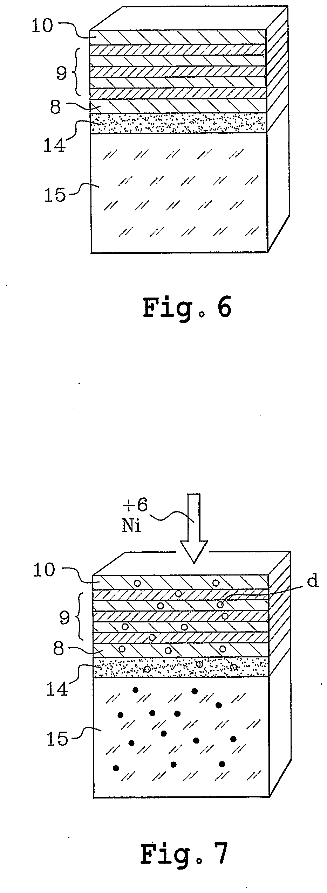

La figure 6 représente une première étape de fabrication du composant selon le premier mode de réalisation de l'invention. La première étape est une étape de croissance de couches semi-conductrices sur un substrat de croissance 15, par exemple un substrat InP. Les couches semi-conductrices que l'on fait croître sur le substrat 15 sont successivement :

- une couche d'arrêt 14, par exemple une couche In-GaAsP d'épaisseur 250nm,
- une première couche de phase 8, par exemple une couche InP d'épaisseur 250nm,
- un ensemble 9 constitué par des puits quantiques et des barrières de séparation des puits quantiques, cet ensemble étant élaboré pour avoir les propriétés d'absorption excitoniques voulues à la longueur d'onde d'utilisation, par exemple 1,55 $\mu$m,
- une deuxième couche de phase 10, par exemple une couche InP d'épaisseur 75nm.

Le nombre de puits quantiques peut être, par exemple, égal à 3, chaque puits quantique ayant une épaisseur de 9nm et chaque barrière de séparation entre puits quantiques ayant une épaisseur de 7nm. Cette faible épaisseur absorbante permet avantageusement de réduire les effets thermiques et d'avoir des puissances de saturation compatibles avec les puissances disponibles à haut débit.

La croissance des couches semi-conductrices sur le substrat 15 est effectuée, par exemple, par épitaxie MOVPE (MOVPE pour « Metal Organic Vapor Phase Epitaxy »). Un accord de maille entre les réseaux cristallins des couches et du substrat doit être respecté. C'est pour cette raison que la croissance des couches se fait sur un substrat InP et non pas, par exemple, sur un substrat de silicium (Si). La composition de la couche d'arrêt 14 est ajustée pour obtenir une bande d'absorption située, par exemple, vers 1,41$\mu$m et les épaisseurs des puits quantiques et des barrières entre puits quantiques sont alors ajustées pour obtenir une absorption excitonique marquée autour de 1,55$\mu$m.

L'étape de croissance de matériaux sur le substrat de croissance 15 est suivie d'une étape d'irradiation ionique telle que représentée en figure 7.

Des ions, par exemple des ions Ni$^{+6}$, sont envoyés sur la deuxième couche de phase 10. Ils traversent alors la structure constituée des couches successives 10, 9, 8 et 14 pour finir leur course dans le substrat de croissance 15. Lors de leur parcours, les ions créent des défauts cristallins d dans le matériau absorbant. La présence de défauts dans le matériau absorbant permet avantageusement d'accélérer le processus de relaxation de l'absorption sans dégradation des propriétés de cette dernière. Les défauts jouent en effet le rôle de centres de capture efficaces de paires électron-trou. L'énergie d'irradiation est ajustée pour que les ions traversent toute la structure et finissent leur parcours dans le substrat de croissance. Ce dernier sera par la suite retiré de façon à éviter toute absorption résiduelle des ions.

La diminution du temps de relaxation de l'absorption est directement liée à la dose d'irradiation, c'est-à-dire au nombre d'ions par unité de surface. Cette technique permet avantageusement d'ajuster le temps de réponse du composant après l'étape de croissance épitaxiale des couches semi-conductrices. Des temps de réponse inférieurs à la picoseconde peuvent être obtenus sans dégradation de l'absorption excitonique. La dose d'irradiation d'ions Ni$^{+6}$ peut, par exemple, être égale à $2.10^{11}$ ions par cm$^2$, ce qui conduit à un composant dont le temps de réponse est sensiblement égal à 6ps. L'énergie des ions peut être égale à 11 MeV, ce qui induit une distance d'arrêt sensiblement égale à 2$\mu$m. Les ions traversent ainsi toute la structure et atterrissent dans le substrat (qui sera retiré par la suite), toute absorption résiduelle est alors évitée.

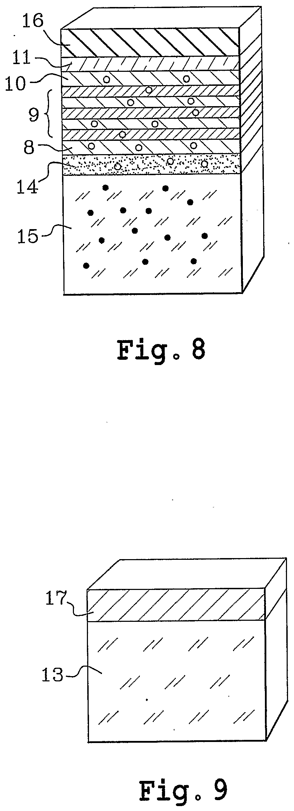

Le dépôt du miroir arrière 11 et d'un ensemble de couches métalliques succède à l'étape d'irradiation, comme représenté en figure 8.

Le miroir arrière 11 est déposé sur la deuxième couche de phase 10. Le dépôt est effectué sous vide, c'est-à-dire, par exemple, à une pression sensiblement égale à 10$^{-7}$ Torr. Le matériau utilisé pour réaliser le miroir est un métal choisi pour ses bonnes qualités optiques et thermiques, c'est-à-dire pour présenter une réflectivité et une conductivité thermique élevées. Un dépôt d'argent (Ag) ou d'or (Au) vérifie bien ces deux conditions. A titre d'exemple non limitatif, un miroir d'argent de 300nm d'épaisseur peut être formé sur la deuxième couche de phase, après désoxydation de la surface de cette deuxième couche par attaque chimique à base d'acide chlorhydrique (HCL) dilué à 10%. La réflectivité du miroir arrière est alors égale à environ 95%.

Sur le miroir arrière 11 sont déposées un ensemble de couches métalliques constituées, successivement, d'une barrière de diffusion, d'une couche d'or et d'une couche d'indium. Seule la couche d'indium 16 est représentée sur la figure 8. La barrière de diffusion peut être, par exemple, une couche de titane (Ti) de 120nm d'épaisseur. L'épaisseur de la couche d'or peut être de 300nm et l'épaisseur de la couche d'indium 16 peut être de 1200nm. Le rapport des épaisseurs déposées d'or et d'indium donne une composition de la bicouche or/indium de 60,2% pondéraux en indium.

De son côté, un substrat hôte 13, par exemple un substrat de silicium, est recouvert d'une couche d'or 17, comme représenté en figure 9. La couche d'or est, par exemple, une couche de 300nm d'épaisseur. Avant le dépôt de la couche d'or 17, une fine couche d'accrochage de titane (Ti) d'épaisseur 20nm peut éventuellement être déposée sur le substrat hôte 13.

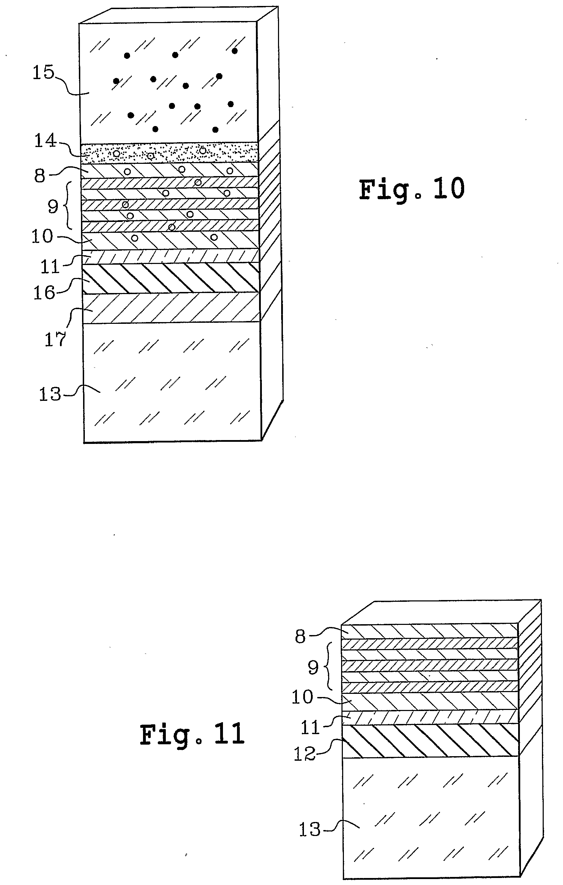

La structure telle que représentée en figure 8 est alors mise en contact avec la structure telle que représentée en figure 9. La mise en contact des deux structures s'effectue, par exemple, dans un dispositif de serrage sous pression contrôlée d'environ 6 bars. Comme cela est représenté en figure 10, ce sont les couches 16 et 17 qui sont mises en contact l'une avec l'autre afin de permettre, dans les conditions précisées ci-après, la formation d'une brasure par interdiffusion solide-liquide plus communément connue sous l'appellation de brasure SLID (SLID pour Solid-Liquid-Interdiffusion). Le procédé de fixation par brasure SLID est décrit dans l'article intitulé « Semiconductor Joining by the Solid-Liquid-Interdiffusion (SLID) Process » (Leonard Bernstein, Journal of the Electrochemical Society, p.1282-1288, December 1966) et dans l'article intitulé « Au-In Bonding Below the Eutectic Temperature » (Chin C., Chen Y. and Goran Matijasevic, IEEE Transactions on Components, Hybrids, and Manufacturing Technology, vol.16, N°3, May 1993, p.311-316).

Le principe de la brasure SLID est basé sur la présence, dans les diagrammes de phase de certains systèmes binaires intermétalliques, d'un saut de solidus permettant d'obtenir, à faible température (environ 200°C, inférieure à la température eutectique), des brasures dont le point de fusion dépasse le double de la température du procédé (400-700°C). La condition nécessaire pour avoir un tel système binaire est que l'un des deux métaux ait un point de fusion largement supérieur au point de fusion de l'autre. Le couple or/indium (Au-In) en représente un exemple typique.

D'un point de vue pratique, dans le cas le plus simple, on dépose une couche d'un métal différent sur chacun des deux substrats à assembler. Ensuite, les deux substrats sont mis en contact intime en plaçant les couches métalliques l'une contre l'autre sous une certaine pression. L'ensemble est chauffé à une température légèrement supérieure au point de fusion de l'un des deux métaux, par exemple l'indium dans le cas du couple or/indium. Ce dernier fond et mouille la surface de l'autre métal (Au). Ensuite, l'interdiffusion solide-liquide des deux métaux entraîne une consommation de la phase liquide (In) et la formation des composés intermétalliques solides, en premier lieu $AuIn_2$ dans le cas du couple or/indium. Il faut souligner que la solidification du joint de brasure s'effectue dans des conditions isothermiques inférieures à celles de la température eutectique. C'est le point qui différencie la brasure SLID des brasures conventionnelles où l'alliage est réalisé à une température supérieure à sa température eutectique et la solidification de l'alliage est obtenue au moment du refroidissement. Après solidification complète du joint de brasure, l'interdiffusion peut continuer à l'état solide jusqu'à l'équilibre thermodynamique du système. Le rapport des épaisseurs des couches déposées est défini par la stoechiométrie de l'alliage final. Ce rapport doit être choisi de telle sorte que la température de refonte de l'alliage final soit sensiblement supérieure à la température du procédé de brasage. A titre d'exemple, dans le cas d'un système Au/In et une température de procédé de 200°C, le rapport des épaisseurs totales des couches d'indium et d'or peut être pris comme 2 à 1, donnant une composition finale de l'alliage or/indium de 43,1% pondéraux en indium. A l'équilibre thermodynamique, la brasure finale d'un tel système est composée de deux phases solides AuIn et $AuIn_2$ référencées 12 sur les figures 5 et 11.

A part le couple Au-In, d'autres systèmes binaires peuvent être utilisés pour la brasure SLID. Pour les composer, on peut choisir, par exemple, des couples parmi les métaux suivants dont la liste n'est pas exhaustive :

- point de fusion haut : Au, Ag, Pd, Cu ;
- point de fusion bas : In, Sn, Pb.

La brasure SLID peut également être un alliage ternaire, ou plus, avec addition d'autres éléments destinés à améliorer certaines propriétés comme, par exemple, les propriétés mécaniques.

Les dépôts métalliques peuvent être réalisés par différentes méthodes d'évaporation sous vide ou par un dépôt électrolytique. Généralement, l'épaisseur du joint de brasure réalisé est compris entre $1\mu m$ et $2\ \mu m$.

Le chauffage peut être réalisé par des voies thermiques ou micro-onde. Dans ce dernier cas, seules les couches conductrices sont chauffées, évitant ainsi le recuit des couches actives du composant et diminuant considérablement le temps total du procédé d'assemblage.

Comme tout métal, l'indium est très réactif à l'état liquide et pourrait attaquer le miroir métallique et les couches actives. La barrière de diffusion mentionnée précédemment permet d'éviter cette attaque. La barrière de diffusion peut être une couche de titane, comme dans l'exemple mentionné ci-dessus, ou une couche de W, Pt, Nb, Cr, ou Ta, ou encore une multicouche ou un alliage fait d'au moins un de ces métaux.

La technique d'assemblage par brasure SLID permet avantageusement de satisfaire, entre autres, les trois conditions suivantes :

(i) une bonne conductivité thermique du composant qui assure une évacuation efficace de la chaleur en dehors des couches actives ;

(ii) un procédé à basse température qui permet d'éviter l'induction de fortes contraintes pendant le refroidissement, ainsi que la guérison des défauts créés lors de l'irradiation ;

(iii)une bonne uniformité de la surface du composant obtenu.

Une fois les structures ainsi assemblées, le substrat de croissance 15 dans lequel des ions sont implantés et la couche d'arrêt 14 sont retirés. La structure obtenue après retrait du substrat de croissance et de la couche d'arrêt est représentée en figure 11.

Le retrait du substrat 15 peut se faire par un amincissement mécanique suivi d'une gravure sélective, sèche ou humide. L'amincissement permet de réduire l'épaisseur du substrat, par exemple d'environ 90%, et l'étape de gravure chimique permet de retirer ce qui reste du substrat. Le retrait du substrat 15 peut également être réalisé entièrement par gravure chimique sélective, sèche ou humide. La sélectivité du procédé de gravure doit être élevée (typiquement supérieure à 100) afin de protéger le reste de la structure. La couche d'arrêt 14 remplit parfaitement ce rôle. La couche d'arrêt 14 est composée d'un matériau différent de celui du substrat de croissance et son épaisseur est de l'ordre de trois fois l'épaisseur de la première couche de phase.

Le retrait de la couche d'arrêt 14 est ensuite effectué. Une gravure, par exemple une gravure chimique humide, permet de retirer la couche d'arrêt. La sélectivité du procédé de gravure doit également être élevée (typiquement supérieure à 1000) afin de protéger la cavité.

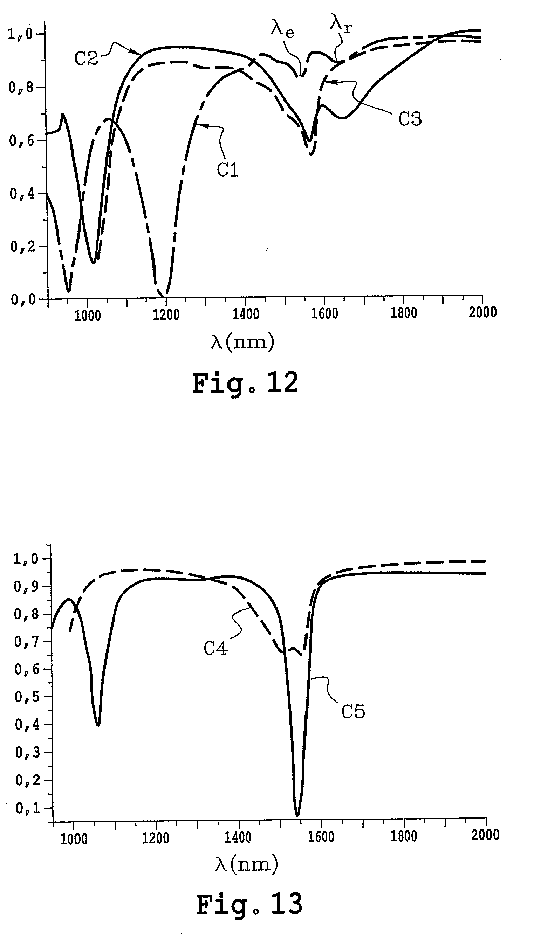

Un réglage de l'épaisseur de la cavité, contrôlé par une caractérisation spectrale du composant, succède à l'étape de retrait de la couche d'arrêt 14. Ce réglage a pour but de faire coïncider l'absorption excitonique et le mode de résonance de la cavité. La figure 12 représente des courbes de réglage C1, C2, C3 établies lors de la caractérisation spectrale.

La caractérisation spectrale permet tout d'abord de localiser la position spectrale de l'absorption excitonique $\lambda_e$ et la position spectrale du mode de résonance de la cavité $\lambda_r$ (cf. courbe C1). L'épaisseur de la cavité détermine la longueur d'onde de résonance. Le réglage se fait par une gravure très lente de la première couche de phase (vitesse de gravure par exemple de l'ordre de $\lambda/100$ par minute). La gravure de la première couche de phase permet de décaler le mode de résonance de la cavité de façon à faire coïncider celui-ci avec la raie excitonique. Les courbes C1, C2, C3 illustrent l'évolution du spectre du composant lors de l'opération de gravure. L'adaptation est réalisée lorsque l'absorption excitonique et le mode de résonance de la cavité coïncident (courbe C3). L'originalité de cette étape du procédé selon l'invention réside dans la possibilité de faire le contrôle d'épaisseur après la croissance et après le dépôt du miroir métallique.

Il reste alors à adapter l'impédance, c'est-à-dire à annuler la réflectivité totale du composant en régime linéaire afin de maximiser le contraste de commutation. L'étape d'adaptation d'impédance est réalisée par le dépôt du miroir avant 7. Le miroir avant 7 est un miroir de Bragg ayant une réflectivité inférieure à la réflectivité du miroir arrière 11. La longueur d'onde de travail du miroir de Bragg doit évidemment être centrée sur celle de la raie excitonique, de façon que le miroir n'ajoute pas de retard de phase supplémentaire. Ceci assure que la résonance de cavité, qui a été réglée sur la résonance excitonique, ne bougera plus. Le miroir de Bragg peut être fait d'un empilement de couches diélectriques, par exemple une alternance de couches $SiO_2$ et $TiO_2$ ou une alternance de couches $SiO_2$ et Si. Le miroir avant 7 est réalisé par dépôt sur la première couche de phase 8. La réflectivité du miroir avant est choisie pour vérifier la condition d'adaptation d'impédance (cf. équation (1)). Le dépôt du miroir avant conduit à l'obtention de la structure selon l'invention représentée en figure 5. Ce mode de fabrication qui consiste à faire le dépôt du miroir avant en dernière étape est préférable selon l'invention. Il permet en effet de choisir le dépôt adéquat (avec la valeur de réflectivité qui réalise la condition d'adaptation d'impédance (1)) afin d'annuler la réflectivité du composant à faible intensité et de renforcer ainsi son contraste de commutation.

Le composant selon l'invention ainsi que son procédé de fabrication présente ainsi plusieurs avantages par rapport à un composant de l'art antérieur, avantages parmi lesquels on peut citer :

- le mode de fabrication qui permet le contrôle des paramètres de la cavité (un choix de miroir avant de réflectivité plus élevée est rendu possible ce qui a pour effet de renforcer le champ intra cavité et de réduire la puissance de saturation),
- une valeur faible de la puissance absorbée par le matériau absorbant du fait de l'épaisseur très faible de ce matériau (épaisseur inférieure, par exemple, à 100nm),
- une très bonne évacuation de la puissance absorbée due au fait que le miroir arrière est enterré, grâce au joint de brasure, dans un substrat très bon conducteur thermique,
- le fait que la raie excitonique n'est pas dégradée par les défauts créés par l'irradiation ionique,
- la possibilité de contrôler le temps de réponse du composant grâce à un étalonnage préalable de la relation entre le temps de réponse et la dose d'irradiation,
- le fait que le procédé n'exige pas l'utilisation d'un substrat de croissance transparent à la longueur d'onde d'utilisation car il est retiré par la suite.

A titre d'illustration, la figure 13 représente des courbes expérimentales de réflectivité du composant selon le premier mode de réalisation de l'invention avant dépôt du miroir (courbe C4) et après dépôt du miroir (courbe C5).

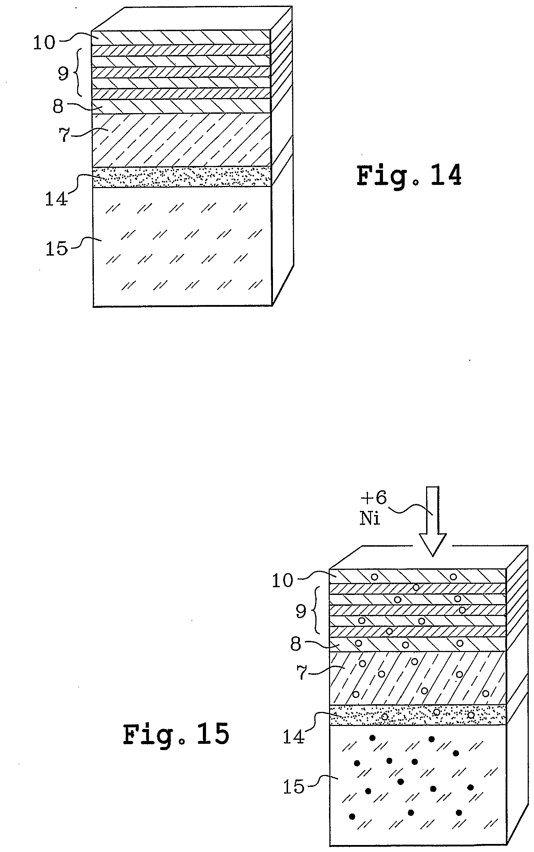

Un deuxième mode de réalisation de l'invention va maintenant être décrit en référence aux figures 14 à 17.

Selon le deuxième mode de réalisation de l'invention, le miroir de Bragg est un miroir semi-conducteur épitaxié réalisé lors de l'étape de croissance de couches semi-conductrices sur le substrat 15 mentionnée précédemment. Les couches semi-conductrices que l'on fait croître sur le substrat 15 sont alors successivement, la couche d'arrêt 14, le miroir de Bragg 7, la première couche de phase 8, la structure absorbante 9 et la deuxième couche de phase 10. Le miroir de Bragg peut alors être constitué, par exemple, d'une alternance de couches InP et InGaAsP.

La figure 14 représente une structure obtenue à la suite de l'étape de croissance épitaxiale et la figure 15 représente l'étape d'irradiation de la structure ainsi obtenue.

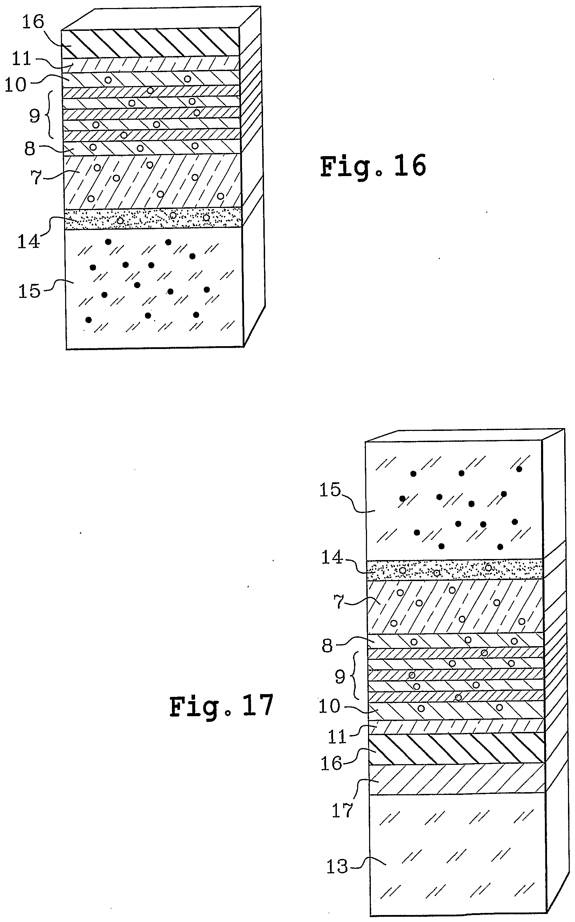

A l'étape d'irradiation succède l'étape de dépôt du miroir arrière 11 et de la couche métallique 16 de façon à obtenir une structure telle que représentée en figure 16. La structure telle que représentée en figure 16 est alors mise en contact avec une structure telle que représentée en figure 9. Ce sont les couches 16 et 17 qui sont mises en contact l'une avec l'autre de façon à former une brasure SLID, comme cela a été mentionné précédemment pour le premier mode de réalisation de l'invention. Le substrat de croissance 15 et la couche d'arrêt 14 sont ensuite retirés pour obtenir un composant à absorbant saturable tel que représenté en figure 5.

Le deuxième mode de réalisation de l'invention ne comprend donc pas d'étape de réglage de la cavité par gravure lente de la première couche de phase, comme c'est le cas selon le premier mode de réalisation.

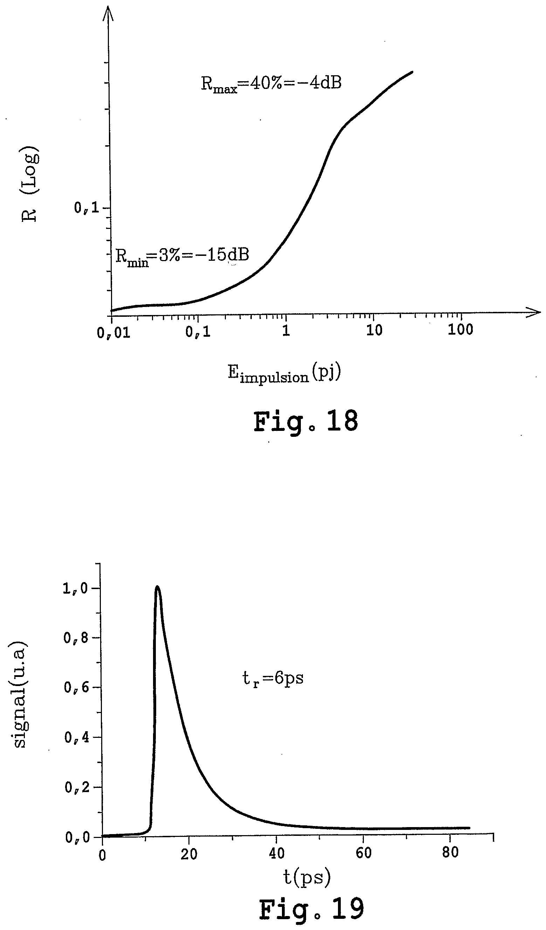

Les figures 18 et 19 illustrent des résultats expérimentaux relatifs à un composant selon l'invention.

La figure 18 représente la réflectivité du composant en échelle logarithmique R(Log) en fonction de l'énergie par impulsion $E_{impulsion}$ d'un train d'impulsions à 20 MHz à la longueur d'onde de 1,55 $\mu$m. On note une très faible réflectivité $R_{min}$ (3%) pour les faibles niveaux d'énergie incidente et une réflectivité élevée $R_{max}$ (40%) pour les forts niveaux du signal incident. Le contraste de commutation est estimé à 11 dB avec une faible énergie de saturation de 1 pJ.

La figure 19 représente le signal non linéaire normalisé du composant en fonction du délai entre le signal d'excitation (pompe) et le signal de sonde. La décroissance très rapide du signal est la signature d'un processus de relaxation accéléré grâce à l'irradiation ionique. La valeur indiquée (6ps) est le temps caractéristique de la décroissance exponentielle du signal, obtenue pour une irradiation Ni$^+$ + à 11 MeV avec une dose de $2.10^{11}$ cm$^{-2}$.

**Revendications**

1. Composant à absorbant saturable comprenant un matériau absorbant (9) situé entre un miroir avant (7) et un miroir arrière (11), le miroir arrière (11) étant un miroir enterré fixé par un joint de brasure (12) sur un substrat thermiquement conducteur (13), **caractérisé en ce que** le miroir arrière (11) est un miroir métallique, et qu'il comprend une barrière de diffusion entre le miroir arrière (11) et le joint de brasure (12).

2. Composant selon la revendication 1, **caractérisé en ce que** le matériau absorbant (9) est constitué d'un ensemble de puits quantiques séparés par des couches barrières.

3. Composant selon la revendication 2, **caractérisé en ce que** les puits quantiques sont des puits InGaAsp et les couches barrières des couches InP.

4. Composant selon la revendication 2 ou 3, **caractérisé en ce que** le matériau absorbant comprend des défauts créés par irradiation ionique.

5. Composant selon l'une quelconque des revendications précédentes, **caractérisé en ce que** le miroir avant (7) est un miroir de Bragg situé en surface du composant et ayant une réflectivité inférieure à la réflectivité du miroir arrière (11).

6. Composant selon la revendication 5, **caractérisé en ce que** le miroir de Bragg est un empilement de couches diélectriques.

7. Composant selon la revendication 6, **caractérisé en ce que** l'empilement de couches diélectriques est fait d'une alternance de couches $SiO_2$ et $TiO_2$ ou d'une alternance de couches $SiO_2$ et Si.

8. Composant selon la revendication 5, **caractérisé en ce que** le miroir de Bragg est un miroir de Bragg semi-conducteur épitaxié.

9. Composant selon la revendication 8, **caractérisé en ce que** le miroir de Bragg semi-conducteur épitaxié est fait d'une alternance de couches InP et InGaAsP non absorbantes.

10. Composant selon la revendication 9, **caractérisé en ce que** les couches InGaAsp sont transparentes à une longueur d'onde d'utilisation.

11. Composant selon l'une quelconque des revendications précédentes, **caractérisé en ce qu'**il comprend une première couche de contrôle de phase (8) située entre le miroir avant (7) et le matériau absorbant (9) et une deuxième couche de contrôle de phase (10) située entre le matériau absorbant (9) et le miroir arrière (11).

**12.** Composant selon la revendication 11, **caractérisé en ce que** la première et la deuxième couches de contrôle de phase (8, 10) sont des couches InP.

**13.** Composant selon l'une des revendications précédentes **caractérisé en ce que** la barrière de diffusion est une couche, ou une multicouche ou un alliage fait à partir d'au moins un des métaux choisi parmi Ti, W, Pt, Nb, Cr, Ta.

**14.** Composant selon l'une quelconque des revendications précédentes, **caractérisé en ce que** le joint de brasure est alliage intermétallique.

**15.** Composant selon la revendication 14, **caractérisé en ce que** l'alliage intermétallique comprend au moins un élément choisi parmi les matériaux suivants : Au, Ag, Cu, Pd, et au moins un élément choisi parmi les matériaux suivants : In, Sn, Pb.

**16.** Composant selon l'une quelconque des revendications précédentes, **caractérisé en ce que** le miroir arrière (11) est en Au ou en Ag.

**17.** Procédé de fabrication de composant à absorbant saturable comprenant un matériau absorbant (9) situé entre un miroir avant (7) et un miroir arrière (11), comprenant :

    - la formation d'une première structure (17, 13) par dépôt d'une première couche métallique (17) sur un substrat thermiquement conducteur (13),
    - la formation d'une deuxième structure par empilement, sur un substrat de croissance (15), du matériau absorbant (9), du miroir arrière (11) et d'une deuxième couche métallique (16), comprenant également le dépôt d'une barrière de diffusion sur le miroir arrière (11).
    - une mise en contact des premières (17) et deuxième (16) couches métalliques, et
    - une brasure par interdiffusion solide-liquide des premières (17) et deuxième (16) couches métalliques.

**18.** Procédé selon la revendication 17 comprenant le dépôt d'une couche d'or sur la barrière de diffusion.

**19.** Procédé selon l'une des revendications 17 ou 18 **caractérisé en ce que** la formation de la deuxième structure (15, 14, 8, 9, 10, 11 et 16) comprend le dépôt d'une couche d'arrêt (14), puis d'une première couche de phase (8) sur le substrat de croissance (15), et le dépôt d'une deuxième couche de phase (10) sur le matériau absorbant (9).

**20.** Procédé selon la revendication 19 **caractérisé en ce qu'**il comprend, avent le dépôt du miroir arrière (11) sur la deuxième couche de phase (10), une étape d'irradiation ionique de la deuxième couche de phase de façon à créer des défauts cristallins dans le matériau absorbant (9).

**21.** Procédé de fabrication de composant à absorbant saturable selon l'une quelconque des revendications 17 à 20, **caractérisé en ce qu'**il comprend, successivement, le retrait du substrat de croissance (15) et le retrait de la couche d'arrêt (14) et, après le retrait de la couche d'arrêt (14), une étape de la gravure lente de la première couche de phase (8), ladite gravure lente étant contrôlée par une caractérisation spectrale du composant.

**22.** Procédé de la fabrication de composant à absorbant saturable selon la revendication 21 **caractérisé en ce qu'**il comprend, après l'étage de gravure lente, une étape de dépôt du miroir avant (7).

**23.** Procédé de fabrication de composant à absorbant saturable selon la revendication 22 **caractérisé en ce que** le miroir avant (7) est un miroir de Bragg réalisé par empilement de couches diélectriques.

**24.** Procédé de fabrication de composant à absorbant saturable selon la revendication 23 **caractérisé en ce que** l'empilement de couches diélectriques est réalisé par une alternance de couches $SiO_2$ et $TiO_2$ ou une alternance de couches $SiO_2$ et Si.

**25.** Procédé de fabrication de composant à absorbant saturable selon la revendication 17 **caractérisé en ce que** la formation de la deuxième structure (15, 14, 7, 8, 9, 10, 11, 16) est réalisée par croissance épitaxiale, sur le substrat de croissance (15), successivement, d'une couche d'arrêt (14), du miroir avant (7), d'une première couche de phase (8), du matériau absorbant (9), d'une deuxième couche de phase (10), du miroir arrière (11) et de la deuxième couche métallique (16).

**26.** Procédé de fabrication de composant à absorbant saturable selon la revendication 25 **caractérisé en ce qu'**il comprend, avant le dépôt du miroir arrière (11) sur la deuxième couche de phase (10), une étape d'irradiation ionique de la deuxième couche de phase de façon à créer des défauts cristallins dans le matériau absorbant (9).

**27.** Procédé de fabrication de composant à absorbant saturable selon l'une des revendications 20 ou 26, **caractérisé en ce que** l'énergie d'irradiation est ajustée pour que les ions finissent leur parcours dans le substrat de croissance (15).

**28.** Procédé de fabrication de composant à absorbant saturable selon l'une quelconque des revendications 20, 26, ou 27, **caractérisé en ce que** les ions sont des ions Ni$^{+6}$.

**29.** Procédé de fabrication de composant à absorbant saturable selon la revendication 25 ou 26 **caractérisé en ce que** le miroir avant (7) est un miroir de Bragg réalisé par une alternance de couches InP et InGaAsP.

**30.** Procédé de fabrication de composant à absorbant saturable selon la revendication 25 ou 26 **caractérisé en ce qu'**il comprend, successivement, le retrait du substrat de croissance (15) et le retrait de la couche d'arrêt (14).

**31.** Procédé de fabrication de composant à absorbant saturable selon la revendication 21 ou 30 **caractérisé en ce que** le retrait du substrat de croissance (15) est effectué par polissage mécanique puis par gravure.

**32.** Procédé de fabrication de composant à absorbant saturable selon l'une quelconque des revendications 21, 30 ou 31, **caractérisé en ce que** le retrait de la couche d'arrêt est effectué par gravure.

**33.** Procédé de fabrication de composant à absorbant saturable selon l'une quelconques des revendications 17 à 32, **caractérisé en ce que** le dépôt de la première couche métallique (17) est précédé du dépôt d'une couche d'accrochage sur le substrat thermiquement conducteur (13).

**34.** Procédé de fabrication de composant à absorbant saturable selon l'une quelconque des revendications 17 à 33, **caractérisé en ce que** la première couche métallique (17) est réalisée à partir d'au moins un des métaux suivants : Au, Ag, Pd, Cu, et **en ce que** la deuxième métallique (16) est réalisé à partir de l'un quelconque des métaux suivants : In, Sn, Pb.

**35.** Procédé de fabrication de composant à absorbant saturable selon l'une quelconque des revendications 17 à 34, **caractérisé en ce que** le dépôt du matériau absorbant (9) est réalisé par le dépôt d'une succession de puits quantiques et de barrières de séparation de puits quantiques.

**36.** Procédé de fabrication de composant à absorbant saturable selon l'une quelconque des revendications 17 à 35, **caractérisé en ce qu'**il comprend une étape de dépôt de miroir arrière (11) sous la forme d'un dépôt de couche d'or (Au) ou d'argent (Ag).

**Patentansprüche**

**1.** Sättigbares Absorberbauteil, umfassend ein Absorbermaterial (9) zwischen einem vorderen Spiegel (7) und einem hinteren Spiegel (11), wobei der hintere Spiegel (11) ein unterirdischer Spiegel ist, der mit einer Lötnaht (12) auf einem thermisch leitenden Substrat (13) befestigt ist, **dadurch gekennzeichnet, dass** der hintere Spiegel (11) ein Metallspiegel ist und dass er eine Diffusionsbarriere zwischen dem hinteren Spiegel (11) und der Lötnaht (12) umfasst.

**2.** Bauteil nach Anspruch 1, **dadurch gekennzeichnet, dass** das Absorbermaterial (9) von einer Gruppe von Quantentöpfen gebildet ist, die von Barriereschichten getrennt sind.

**3.** Bauteil nach Anspruch 2, **dadurch gekennzeichnet, dass** die Quantentöpfe InGaAsP-Töpfe und die Barriereschichten InP-Schichten sind.

**4.** Bauteil nach Anspruch 2 oder 3, **dadurch gekennzeichnet, dass** das Absorbermaterial Fehler umfasst, die durch Ionenbestrahlung gebildet sind.

**5.** Bauteil nach einem der vorangehenden Ansprüche, **dadurch gekennzeichnet, dass** der vordere Spiegel (7) ein Bragg-Spiegel ist, der sich auf der Oberfläche des Bauteils befindet und eine geringere Reflektivität als die Reflektivität des hinteren Spiegels (11) hat.

**6.** Bauteil nach Anspruch 5, **dadurch gekennzeichnet, dass** der Bragg-Spiegel eine Stapelung dielektrischer Schichten ist.

**7.** Bauteil nach Anspruch 6, **dadurch gekennzeichnet, dass** die Stapelung dielektrischer Schichten aus einer Abfolge von SiO$_2$- und TiO$_2$-Schichten oder einer Aufeinanderfolge von SiO$_2$- und Si-Schichten gemacht ist.

**8.** Bauteil nach Anspruch 5, **dadurch gekennzeichnet, dass** der Bragg-Spiegel ein Epitaxie-Halbleiter-Bragg-Spiegel ist.

**9.** Bauteil nach Anspruch 8, **dadurch gekennzeichnet, dass** der Epitaxie-Halbleiter-Bragg-Spiegel aus einer Aufeinanderfolge von nicht absorbierenden InP- und InGaAsP-Schichten gemacht ist.

**10.** Bauteil nach Anspruch 9, **dadurch gekennzeichnet, dass** die InGaAsP-Schichten bei einer Benutzungswellenlänge transparent sind.

**11.** Bauteil nach einem der vorangehenden Ansprüche, **dadurch gekennzeichnet, dass** es eine erste Phasenkontrollschicht (8) zwischen dem vorderen Spiegel (7) und dem Absorbermaterial (9) und eine zweite Phasenkontrollschicht (10) zwischen dem Absorbermaterial (9) und dem hinteren Spiegel (11) umfasst.

12. Bauteil nach Anspruch 11, **dadurch gekennzeichnet, dass** die erste und zweite Phasenkontrollschicht (8, 10) InP-Schichten sind.

13. Bauteil nach einem der vorangehenden Ansprüche, **dadurch gekennzeichnet, dass** la Diffusionsbarriere eine Schicht oder eine Vielfachschicht oder eine Legierung aus mindestens einem der Metalle, ausgewählt aus Ti, W, Pt, Nb, Cr, Ta, ist.

14. Bauteil nach einem der vorangehenden Ansprüche, **dadurch gekennzeichnet, dass** die Lötnaht eine intermetallische Legierung ist.

15. Bauteil nach Anspruch 14, **dadurch gekennzeichnet, dass** die intermetallische Legierung mindestens ein Element umfasst, das aus den folgenden Materialien ausgewählt ist: Au, Ag, Cu, Pd, und mindestens ein Element, das aus den folgenden Materialien ausgewählt ist: In, Sn, Pb.

16. Bauteil nach einem der vorangehenden Ansprüche, **dadurch gekennzeichnet, dass** der hintere Spiegel (11) aus Au oder aus Ag ist.

17. Herstellungsverfahren von sättigbarem Absorberbauteil, umfassend ein Absorbermaterial (9) zwischen einem vorderen Spiegel (7) und einem hinteren Spiegel (11), umfassend:

   - das Bilden einer ersten Struktur (17, 13) durch Ablagern einer ersten Metallschicht (17) auf einem thermisch leitenden Substrat (13),
   - das Bilden einer zweiten Struktur durch Stapeln, auf einem Wachstumssubstrat (15), des Absorbermaterials (9), des hinteren Spiegels (11), und einer zweiten Metallschicht (16), umfassend ebenfalls das Ablagern einer Diffusionsbarriere auf dem hinteren Spiegel (11),
   - ein Inkontaktversetzen der ersten (17) und zweiten (16) Metallschicht, und
   - ein Löten durch Fest-Flüssig-Interdiffusion der ersten (17) und zweiten (16) Metallschicht.

18. Verfahren nach Anspruch 17, umfassend das Ablagern einer Goldschicht auf der Diffusionsbarriere.

19. Verfahren nach einem der Ansprüche 17 oder 18, **dadurch gekennzeichnet, dass** das Bilden der zweiten Struktur (15, 14, 8, 9, 10, 11 und 16) das Ablagern einer Sperrschicht (14), danach einer ersten Phasenschicht (8) auf dem Wachstumssubstrat (15) und das Ablagern einer zweiten Phasenschicht (10) auf dem Absorbermaterial (9) umfasst.

20. Verfahren nach Anspruch 19, **dadurch gekennzeichnet, dass** es vor dem Ablagern des hinteren Spiegels (11) auf der zweiten Phasenschicht (10) einen Schritt der Ionenbestrahlung der zweiten Phasenschicht umfasst, um Kristallfehler im Absorbermaterial (9) zu bilden.

21. Herstellungsverfahren von sättigbarem Absorberbauteil nach einem der Ansprüche 17 bis 20, **dadurch gekennzeichnet, dass** es nacheinander das Entfernen des Wachstumssubstrats (15) und das Entfernen der Sperrschicht (14) und nach dem Entfernen der Sperrschicht (14) einen Langsamgravurschritt der ersten Phasenschicht (8) umfasst, wobei die langsame Gravur von einer Spektralcharakterisierung des Bauteils kontrolliert wird.

22. Herstellungsverfahren von sättigbarem Absorberbauteil nach Anspruch 21, **dadurch gekennzeichnet, dass** es nach dem Langsamgravurschritt einen Ablagerungsschritt des vorderen Spiegels (7) umfasst.

23. Herstellungsverfahren von sättigbarem Absorberbauteil nach Anspruch 22, **dadurch gekennzeichnet, dass** der vordere Spiegel (7) ein durch Stapelung dielektrischer Schichten hergestellter Bragg-Spiegel ist.

24. Herstellungsverfahren von sättigbarem Absorberbauteil nach Anspruch 23, **dadurch gekennzeichnet, dass** die Stapelung dielektrischer Schichten durch eine Aufeinanderfolge von $SiO_2$- und $TiO_2$-Schichten oder eine Aufeinanderfolge von $SiO_2$- und Si-Schichten hergestellt ist.

25. Herstellungsverfahren von sättigbarem Absorberbauteil nach Anspruch 17, **dadurch gekennzeichnet, dass** die Bildung der zweiten Struktur (15, 14, 7, 8, 9, 10, 11, 16) durch Epitaxiewachstum auf dem Wachstumssubstrat (15) nacheinander einer Sperrschicht (14), des vorderen Spiegels (7), einer ersten Phasenschicht (8), des Absorbermaterials (9), einer zweiten Phasenschicht (10), des hinteren Spiegels (11) und der zweiten Metallschicht (16) durchgeführt wird.

26. Herstellungsverfahren von sättigbarem Absorberbauteil nach Anspruch 25, **dadurch gekennzeichnet, dass** es vor dem Ablagern des hinteren Spiegels (11) auf der zweiten Phasenschicht (10) einen Schritt der Ionenbestrahlung der zweiten Phasenschicht umfasst, um Kristallfehler im Absorbermaterial (9) zu bilden.

27. Herstellungsverfahren von sättigbarem Absorberbauteil nach einem der Ansprüche 20 oder 26, **dadurch gekennzeichnet, dass** die Bestrahlungsenergie eingestellt ist, damit die Ionen ihren Weg im Wachstumssubstrat (15) beenden.

**28.** Herstellungsverfahren von sättigbarem Absorberbauteil nach einem der Ansprüche 20, 26 oder 27, **dadurch gekennzeichnet, dass** die Ionen Ni$^{+6}$-Ionen sind.

**29.** Herstellungsverfahren von sättigbarem Absorberbauteil nach Anspruch 25 oder 26, **dadurch gekennzeichnet, dass** der vordere Spiegel (7) ein durch eine Aufeinanderfolge von. InP- und InGaAsP-Schichten hergestellter Bragg-Spiegel ist.

**30.** Herstellungsverfahren von sättigbarem Absorberbauteil nach Anspruch 25 oder 26, **dadurch gekennzeichnet, dass** es nacheinander das Entfernen des Wachstumssubstrats (15) und das Entfernen der Sperrschicht (14) umfasst.

**31.** Herstellungsverfahren von sättigbarem Absorberbauteil nach Anspruch 21 oder 30, **dadurch gekennzeichnet, dass** das Entfernen des Wachstumssubstrats (15) durch mechanisches Polieren, gefolgt von Gravur, durchgeführt wird.

**32.** Herstellungsverfahren von sättigbarem Absorberbauteil nach einem der Ansprüche 21, 30 oder 31, **dadurch gekennzeichnet, dass** das Entfernen der Sperrschicht durch Gravur durchgeführt wird.

**33.** Herstellungsverfahren von sättigbarem Absorberbauteil nach einem der Ansprüche 17 bis 32, **dadurch gekennzeichnet, dass** vor dem Ablagern der ersten Metallschicht (17) das Ablagern einer Haftschicht auf dem thermisch leitenden Substrat (13) erfolgt.

**34.** Herstellungsverfahren von sättigbarem Absorberbauteil nach einem der Ansprüche 17 bis 33, **dadurch gekennzeichnet, dass** die erste Metallschicht (17) aus mindestens einem der folgenden Metalle hergestellt ist: Au, Ag, Pd, Cu, und dass die zweite Metallschicht (16) aus einem der folgenden Metalle hergestellt ist: In, Sn, Pb.

**35.** Herstellungsverfahren von sättigbarem Absorberbauteil nach einem der Ansprüche 17 bis 34, **dadurch gekennzeichnet, dass** das Ablagern des Absorbermaterials (9) durch Ablagern einer Nacheinanderfolge von Quantentöpfen und von Trennbarrieren der Quantentöpfe durchgeführt wird.

**36.** Herstellungsverfahren von sättigbarem Absorberbauteil nach einem der Ansprüche 17 bis 35, **dadurch gekennzeichnet, dass** es einen Ablagerungsschritt des hinteren Spiegels (11) in Form einer Ablagerung einer Gold- (Au) oder Silberschicht (Ag) umfasst.

**Claims**

**1.** A saturable absorber component comprising an absorbent material (9) located between a front mirror (7) and a rear mirror (11), wherein the rear mirror (11) is a buried mirror fixed by a soldering joint (12) on a heat conductive substrate (13), **characterized in that** the rear mirror (11) is a metallic mirror, and that it comprises a diffusion barrier between the rear mirror (11) and the soldering joint (12).

**2.** The component according to claim 1, **characterized in that** the absorbent material (9) consists of a set of quantum wells separated by barrier layers.

**3.** The component according to claim 2, **characterized in that** the quantum wells are InGaAsP wells and the barrier layers are InP layers.

**4.** The component according to claim 2 or 3, **characterized in that** the absorbent material comprises defects created by ion irradiation.

**5.** The component according to any one of the preceding claims, **characterized in that** the front mirror (7) is a Bragg mirror located on the surface of the component and having a reflectivity inferior to the reflectivity of the rear mirror (11).

**6.** The component according to claim 5, **characterized in that** the Bragg mirror is a stack of dielectric layers.

**7.** The component according to claim 6, **characterized in that** the stack of dielectric layers is made of an alternation of $SiO_2$ and $TiO_2$ layers or of an alternation of $SiO_2$ and Si layers.

**8.** The component according to claim 5, **characterized in that** the Bragg mirror is an epitaxy semiconductive Bragg mirror.

**9.** The component according to claim 8, **characterized in that** the epitaxy semiconductive Bragg mirror is made of an alternation of non-absorbent InP and InGaAsP layers.

**10.** The component according to claim 9, **characterized in that** the InGaAsP layers are transparent at an operating wavelength.

**11.** The component according to any one of the preceding claims, **characterized in that** it comprises a first phase control layer (8) located between the front mirror (7) and the absorbent material (9) and a second phase control layer (10) located between the absorbent material (9) and the rear mirror (11).

12. The component according to claim 11, **characterized in that** the first and second phase control layers (8, 10) are InP layers.

13. The component according to one of the preceding claims, **characterized in that** the diffusion barrier is a layer, or a multilayer or an alloy made from at least one of the metals chosen from Ti, W, Pt, Nb, Cr, Ta.

14. The component according to any one of the preceding claims, **characterized in that** the soldering joint is an intermetallic alloy.

15. The component according to claim 14, **characterized in that** the intermetallic alloy comprises at least one element chosen among the following materials: Au, Ag, Cu, Pd and at least one element chosen among the following elements: In, Sn, Pb.

16. The component according to any one of the preceding claims, **characterized in that** the rear mirror (11) is in Au or Ag.

17. A method for manufacturing saturable absorber components comprising an absorbent material (9) located between a front mirror (7) and a rear mirror (11), comprising:

    - creating a first structure (17, 13) by depositing a first metallic layer (17) on a heat conductive substrate (13),
    - creating a second structure by stacking, on a growth substrate (15), the absorbent material (9), the rear mirror (11) and a second metallic layer (16), also comprising depositing a diffusion barrier on the rear mirror (11),
    - bringing the first (17) and second (16) metallic layers into contact, and
    - solid-liquid interdiffusion soldering the first (17) and second (16) metallic layers.

18. The method according to claim 17, comprising depositing a layer of gold on the diffusion barrier.

19. The method according to one of claims 17 or 18 **characterized in that** creating the second structure (15, 14, 8, 9, 10, 11 and 16) comprises depositing a barrier layer (14), then a first phase layer (8) on the growth substrate (15), and depositing a second phase layer (10 on the absorbent material (9).

20. The method according to claim 19, **characterized in that** it comprises, before depositing the rear mirror (11) on the second phase layer (10), an ion irradiation step of the second phase layer so as to create crystalline defects in the absorbent material (9).

21. The method for manufacturing saturable absorber components according to any one of claims 17 to 20, **characterized in that** it comprises, successively, the removing the growth substrate (15) and the removing the barrier layer (14) and, after the removing the barrier layer (14), a step of slow etching the first phase layer (8), said slow etching being controlled by a spectral characterization of the component.

22. The method for manufacturing saturable absorber components according to claim 21, **characterized in that** it comprises, after the step of slow etching, a step of depositing the front mirror (7).

23. The method for manufacturing saturable absorber components according to claim 22, **characterized in that** the front mirror (7) is a Bragg mirror made by stacking dielectric layers.

24. The method for manufacturing saturable absorber components according to claim 23, **characterized in that** stacking dielectric layers is done by an alternation of $SiO_2$ and $TiO_2$ layers or of an alternation of $SiO_2$ and Si layers.

25. The method for manufacturing saturable absorber components according to claim 17, **characterized in that** creating the second structure (15, 14, 7, 8, 9, 10, 11, 16) is made by epitaxial growth, on the growth substrate (15), successively, a barrier layer (14), the front mirror (7), a first phase layer (8), the absorbent material (9), a second phase layer (10), the rear mirror (11) and the second metallic layer (16).

26. The method for manufacturing saturable absorber components according to claim 25, **characterized in that** it comprises, before depositing the rear mirror (11) on the second phase layer (10), an ion irradiation step of the second phase layer so as to create crystalline defects in the absorbent material (9).

27. The method for manufacturing saturable absorber components according to one of claims 20 or 26, **characterized in that** the irradiation energy is adjusted so that the ions end their travel in the growth substrate (15).

28. The method for manufacturing saturable absorber components according to any one of claims 20, 26 or 27, **characterized in that** the ions are $Ni^{+6}$ ions.

29. The method for manufacturing saturable absorber components according to claim 25 or 26, **characterized in that** the front mirror (7) is a Bragg mirror made by an alternation of InP and InGaAsP layers.

30. The method for manufacturing saturable absorber components according to claim 25 or 26, **characterized in that** it comprises, successively, the removing the growth substrate (15) and the removing the barrier layer (14).

31. The method for manufacturing saturable absorber components according to claim 21 or 30, **characterized in that** the removing the growth substrate (15) is done by mechanical polishing and then by etching.

32. The method for manufacturing saturable absorber components according to any one of claims 21, 30 or 31, **characterized in that** the removing the barrier layer is done by etching.

33. The method for manufacturing saturable absorber components according to any one of claims 17 to 32, **characterized in that** depositing the first metallic layer (17) is preceded by depositing a bonding layer on the heat conductive substrate (13).

34. The method for manufacturing saturable absorber components according to any one of claims 17 to 33, **characterized in that** the first metallic layer (17) is made from at least one of the following metals: Au, Ag, Pd, Cu and **in that** the second metallic layer (16) is made from any one of the following metals: In, Sn, Pb.

35. The method for manufacturing saturable absorber components according to any one of claims 17 to 34, **characterized in that** depositing the absorbent material (9) is done by depositing a succession of quantum wells and barriers separating the quantum wells.

36. The method for manufacturing saturable absorber components according to any one of claims 17 to 35, **characterized in that** it comprises a step of depositing the rear mirror (11) in the form of a gold (Au) or silver (Ag) layer deposit.

Fig. 1

Fig. 2

Fig. 3

**Fig. 4**

**Fig. 5**

Fig. 6

Fig. 7

16
11
10
9
8
14
15

**Fig. 8**

17
13

**Fig. 9**

Fig. 10

Fig. 11

Fig. 12

Fig. 13

10
9
8
7

14

15

Fig. 14

+6
Ni

10
9
8
7

14

15

Fig. 15

Fig. 16

Fig. 17

$R_{max}=40\%=-4dB$

$R_{min}=3\%=-15dB$

Fig. 18

$t_r=6ps$

Fig. 19

**EP 1 470 622 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP H9244075 B

**Littérature non-brevet citée dans la description**

- Solid state low loss intracavity staurable absorber for ND : YLF lasers : an antiresonant semiconductor fabry-pcrot saturable absorber. **KELLER et al.** Optics letters. optical society of America, 01 Avril 1992, vol. 17, 05-507
- **RYO TAKAHASHI.** Low-temperature-grown surface-reflexion all-optical switch (LOTOS). *Optical and Quantum Electronics,* 2001, vol. 33, 999-1017
- **LEONARD BERNSTEIN.** Semiconductor Joining by the Solid-Liquid-Interdiffusion (SLID) Process. *Journal of the Electrochemical Society,* Décembre 1966, 1282-1288
- **CHIN C. ; CHEN Y. ; GORAN MATIJASEVIC.** Au-In Bonding Below the Eutectic Temperature. *IEEE Transactions on Components, Hybrids, and Manufacturing Technology,* Mai 1993, vol. 16 (3), 311-316